(19) Europäisches Patentamt / European Patent Office / Office européen des brevets

(11) **EP 3 798 935 A1**

(12) **EUROPEAN PATENT APPLICATION**
published in accordance with Art. 153(4) EPC

(43) Date of publication:
**31.03.2021 Bulletin 2021/13**

(51) Int Cl.:
***G06N 99/00*** *(2019.01)*

(21) Application number: **18919892.2**

(22) Date of filing: **22.05.2018**

(86) International application number:
**PCT/JP2018/019661**

(87) International publication number:
**WO 2019/224909 (28.11.2019 Gazette 2019/48)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **FUJITSU LIMITED**
**Kanagawa 211-8588 (JP)**

(72) Inventor: **IMAMURA, Nobutaka**
**Kawasaki-shi, Kanagawa 211-8588 (JP)**

(74) Representative: **Haseltine Lake Kempner LLP**
**Cheapside House**
**138 Cheapside**
**London**
**EC2V 6BJ (GB)**

(54) **PARAMETER SELECTION METHOD, PARAMETER SELECTION PROGRAM, AND INFORMATION PROCESSING DEVICE**

(57)     The above-mentioned problem is achieved by a parameter selection method including processing, performed by a computer, of: calculating a response surface that predicts an evaluation value, from evaluation values obtained from training data and sets of parameter values, which are stored in a storage unit; working out, from each of maximum evaluation values among the obtained evaluation values, shortest distances to a contour line defined at a position equal to or smaller than the maximum evaluation values on the calculated response surface; and specifying a set of parameter values farthest from the contour line, from among the shortest distances worked out for each of the maximum evaluation values.

FIG. 8

80

**Description**

TECHNICAL FIELD

The present invention relates to a parameter selection method, a parameter selection program, and an information processing device.

BACKGROUND ART

In machine learning, parameters are set, for example, by selecting a parameter in a grid pattern for training data, learning is performed with each selected parameter, and a predicted value obtained by learning is evaluated to specify a parameter that can obtain the most appropriate evaluation value and to perform optimization.

There is known a technique of, for example, working out sensitivity for each parameter with respect to an evaluation function, and preferentially tuning a highly sensitive parameter to significantly reduce the number of times of convergence.

CITATION LIST

PATENT DOCUMENT

Patent Document 1: Japanese Laid-open Patent Publication No. 8-272761
Patent Document 2: Japanese Laid-open Patent Publication No. 5-265512
Patent Document 3: Japanese Laid-open Patent Publication No. 10-301975

SUMMARY OF INVENTION

TECHNICAL PROBLEM

However, even when a parameter that can obtain the optimum evaluation value with the training data is selected, the evaluation in the real data is sometimes low. There are cases where the tendency differs between the training data and the real data.

Therefore, it is an object of one aspect to improve the determination accuracy.

SOLUTION TO PROBLEM

According to one mode, a parameter selection method is provided, the parameter selection method including processing, performed by a computer, of: calculating a response surface that predicts an evaluation value, from evaluation values obtained from training data and sets of parameter values, which are stored in a storage unit; working out, from each of maximum evaluation values among the obtained evaluation values, shortest distances to a contour line defined at a position equal to or smaller than the maximum evaluation values on the calculated response surface; and specifying a set of parameter values farthest from the contour line, from among the shortest distances worked out for each of the maximum evaluation values.

ADVANTAGEOUS EFFECTS OF INVENTION

The determination accuracy can be improved.

BRIEF DESCRIPTION OF DRAWINGS

FIG. 1 is a diagram for explaining a difference in adopting a set of parameters between a method A and the present embodiment.
FIG. 2 is a diagram for explaining a distance in the present embodiment.
FIG. 3 is a diagram illustrating an exemplary hardware configuration of an information processing device.
FIG. 4 is a diagram illustrating an exemplary functional configuration of a machine learning unit.

FIGs. 5A and 5B are a diagram for explaining exemplary machine learning processing according to the present embodiment.

FIG. 6 is a diagram illustrating exemplary meteorological data in the process in FIG. 5A.

FIG. 7 is a diagram illustrating exemplary data of actual values of the amount of electric power.

FIG. 8 is a diagram illustrating an exemplary configuration in selection processing.

FIG. 9 is a flowchart diagram for explaining the selection processing.

FIG. 10 is a diagram illustrating exemplary appearance of evaluation values in a parameter space.

FIG. 11 is a diagram illustrating an exemplary display of a three-dimensional graph in which evaluation values are added to the exemplary appearance in FIG. 10.

FIG. 12 is a diagram illustrating an example of generating a contour line.

FIGs. 13A and 13B are a diagram for explaining a method of specifying a best parameter value.

## DESCRIPTION OF EMBODIMENTS

Hereinafter, embodiments of the present invention will be described with reference to the drawings. In machine learning, learning is performed using training data, and the prediction result of the learning is evaluated using evaluation data. Furthermore, tuning is performed such that the correct answer can be derived, using data for which the correct answer is known in advance. However, for example, since the data for which the correct answer is known is often past data, or only a part of the data is available, the tuned machine learning does not always give the correct answer in actual operation.

The main causes of this are deemed to be a difference in tendency between the training data and the real data, the influence of noise, and the like. Furthermore, the number of pieces of data differs between the training data and the real data, and it is sometimes difficult for the training data to learn all the tendencies of the real data.

For this reason, it is necessary to perform tuning with high versatility as much as possible, and there are existing techniques of increasing versatility under general conditions; however, for example, when the evaluation values are quantized or because of the influence of noise, there are cases where a plurality of tuning results that finds the most favorable evaluation is given, for example. In such cases, it is difficult to select a parameter that finds a good evaluation value for the real data.

The present embodiments provide a parameter selection method, a parameter selection program, and an information processing device that, when a plurality of tuning results that finds the most favorable evaluation is given, select a tuning result that is deemed to have the highest versatility, from among the plurality of results.

That is, a distance to a boundary that is a boundary of a parameter space that includes a best evaluation point and is closest to each set of parameter values is worked out, and a set of parameter values farthest from the boundary is acquired. Each best evaluation point indicates the highest value in evaluation and a set of parameter values at that time.

Meanwhile, since the scale differs depending on the parameter, the parameter value is normalized. Furthermore, since there are parameters that work for the evaluation value and parameters that do not work for the evaluation value, it is desirable to decrease parameters that do not work for the evaluation value, using a threshold value or the like, and to perform evaluation using only parameters that contribute to the evaluation value to a certain extent or more.

The boundary of the parameter space that includes the best evaluation point is where a "change point" is located at which a slight difference in one or more parameter values in a set of parameters greatly affect the evaluation value. The parameter space that includes the best evaluation points is called a "best parameter space".

In addition, the boundary of the best parameter space represents a shape. The fact that the evaluation result deteriorates if at least one parameter value at the boundary is slightly different is deemed to indicate a point where the evaluation result is differentiated (immediately before the evaluation value deteriorates) even if the evaluated data is slightly different. Therefore, this point corresponds to a set of parameter values that has a risk of having influence when used in real data.

The present embodiment is as follow.

(1) A point where a good evaluation value can be stably obtained is quantified.

(2) A predicted surface of the solution is synthesized from the evaluation result. As an example, a response surface is generated.

(3) A contour line is generated at a height defined for the generated response surface.

(4) A shortest distance between each best evaluation point and the contour line is worked out.

(5) Among the worked-out shortest distances, a best evaluation point with the largest distance from the closest contour line is determined to be an evaluation point farthest from the boundary. In order to obtain a set of parameters that stably finds a good evaluation value, a slope outside the boundary may also be evaluated, and the shortest distance may be evaluated by raising the score using the evaluation result for the slope.

In the above (1) to (5), the reason for performing the above (4) will be described. First, the following will be examined.

<Method A>

This is a method that adopts a point closest to the center of the best parameter space.

<Method B>

This is a method that adopts a set of parameters that first obtains the best evaluation point, a set of parameters that finally obtains the best evaluation point, or a set of parameters that is randomly selected.

<Method C>

This is a method that adopts a set of parameters by analyzing the sensitivity of the parameters.

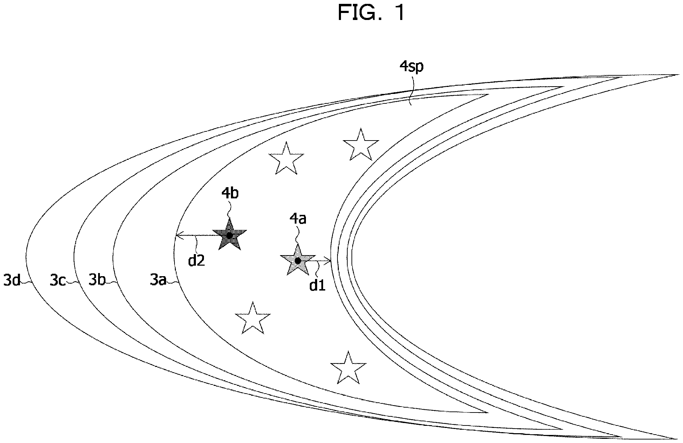

FIG. 1 is a diagram for explaining a difference in adopting a set of parameters between the method A and the present embodiment. FIG. 1 illustrates an overhead view of contour lines 3a, 3b, 3c, and 3d created for a generated response surface as seen from above. The inside of the contour line 3a denotes a best parameter space 4sp. In this example, six best evaluation points that have found the same evaluation value are illustrated in the best parameter space 4sp. Each point represents a set of parameters.

Among the six points in the best parameter space 4sp, a point 4a corresponds to the point closest to the center and is the best evaluation point selected by the method A. On the other hand, in the present embodiment, a point 4b having the largest distance from the contour line 3a is selected as the best evaluation point. In this manner, the point 4a close to the center selected by the method A is not always far from the boundary (contour line 3a) . The method A sometimes fails to specify the point 4b that more stably finds a good evaluation value.

Next, as for the method B, any one of the six points in the best parameter space 4sp is selected in the method B. That is, a point closer to the boundary of the contour line 3a than the point 4a selected by the method A is likely to be selected. The method B has a higher possibility than the method A of failing to specify the point 4b that stably finds a good evaluation value.

Then, as for the method C, a set of parameters is selected by analyzing the sensitivity of the parameters in the method C. Conventionally, a set of parameters has been selected by the method C, but when there is an interaction between parameters, it is not sufficient to analyze the sensitivity of each parameter individually. The sensitivity of a parameter corresponds to the degree of contribution to the evaluation.

In the present embodiment, the influence of a plurality of parameters can be considered at the same time by selecting the point 4b that stably finds the best evaluation point, based on the distance to the boundary (contour line 3a) of the best parameter space 4sp. Here, the distance to be computed in the present embodiment will be described.

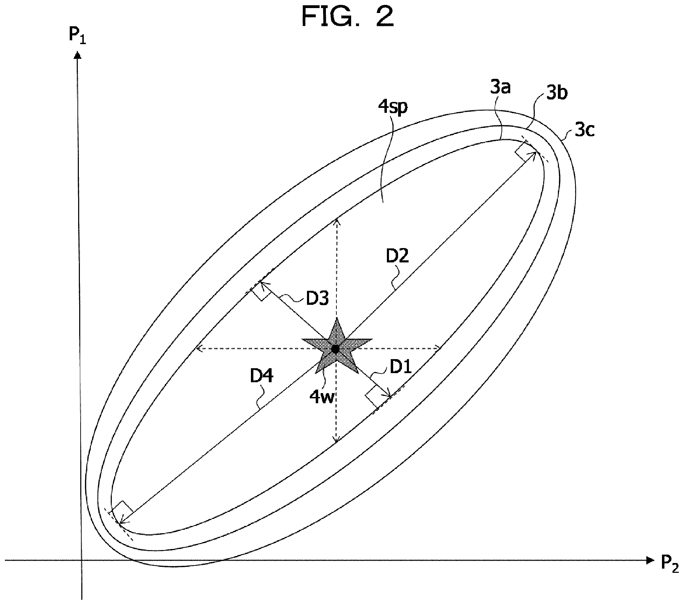

FIG. 2 is a diagram for explaining the distance in the present embodiment. FIG. 2 is an overhead view of the contour lines 3a to 3b as seen from above. A case where the contour lines 3a to 3b each have an elliptical shape diagonally inclined with respect to respective axes $P_1$ and $P_2$ will be described.

In the present embodiment, for each point 4w in the best parameter space 4sp, the distance from the point 4w to the contour line 3a is computed by working out a perpendicular line to a tangent line to the contour line 3a, and a short distance among the computed distances is employed as the distance of the point 4w. In this example, distances D1, D2, D3 and D4 are worked out. The distance D1 that is shortest among these distances D1 to D4 is employed as the distance of the point 4w. The distances indicated by the broken lines in FIG. 2 are not computed because these distances do not correspond to the perpendicular line to the contour line 3a.

Since most of the existing optimization issues have relatively homogeneous parameters, the shape of the solution is a simple shape such as a circle. Therefore, the point close to the median point has been sufficient. However, in machine learning, the features differ depending on the parameters, and the solution has a complicated shape. In the present embodiment, in such machine learning, by quantifying the stability of the best evaluation point by the shortest distance to the contour line 3a, one best evaluation point can be suitably selected from among a plurality of best evaluation points.

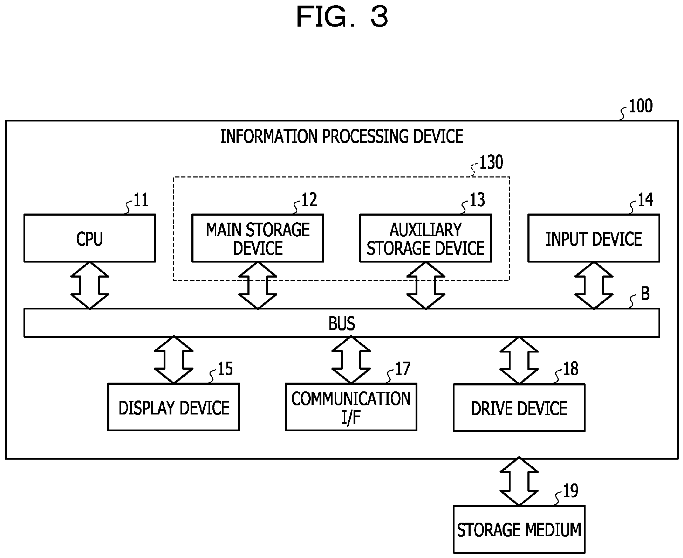

An information processing device that implements parameter selection processing of the present embodiment as described above has a hardware configuration as illustrated in FIG. 3. FIG. 3 is a diagram illustrating an exemplary hardware configuration of the information processing device.

In FIG. 3, the information processing device 100 is an information processing device controlled by a computer, and includes a central processing unit (CPU) 11, a main storage device 12, an auxiliary storage device 13, an input device 14, a display device 15, a communication interface (I/F) 17, and a drive device 18, which are connected to a bus B.

The CPU 11 corresponds to a processor that controls the information processing device 100 in accordance with a program stored in the main storage device 12. A random access memory (RAM), a read only memory (ROM), and the like are used for the main storage device 12, and a program executed by the CPU 11, data necessary for the processing by the CPU 11, data obtained by the processing by the CPU 11, and the like are stored or temporarily saved in the main storage device 12.

A hard disk drive (HDD) or the like is used for the auxiliary storage device 13, and stores data such as programs for executing various types of processing. Various types of processing are implemented by loading a part of the programs stored in the auxiliary storage device 13 into the main storage device 12 and executing the loaded part of the programs in the CPU 11. The main storage device 12, the auxiliary storage device 13, and an external storage device and the like that can be accessed by the information processing device 100 are collectively referred to as a storage unit 130.

The input device 14 is used by a user to input various types of information necessary for the processing by the information processing device 100. The display device 15 displays various types of necessary information under the control of the CPU 11. The input device 14 and the display device 15 may be a user interface implemented by an integrated touch panel or the like. The communication I/F 17 performs communication through a network, for example, by wire or wirelessly. The communication by the communication I/F 17 is not limited to wireless or wired communication.

The drive device 18 interfaces a storage medium 19 (for example, a compact disc read-only memory (CD-ROM)) set in the drive device 18 with the information processing device 100.

The program that implements the processing performed by the information processing device 100 is provided to the information processing device 100, for example, via the drive device 18 by the storage medium 19 such as a CD-ROM. Note that the storage medium 19 that stores the program is not limited to the CD-ROM, and only needs to be one or more non-transitory and tangible media having a computer-readable structure. Besides the CD-ROM, the computer-readable storage medium may be a digital versatile disk (DVD) disk, a portable recording medium such as a universal serial bus (USB) memory, or a semiconductor memory such as a flash memory.

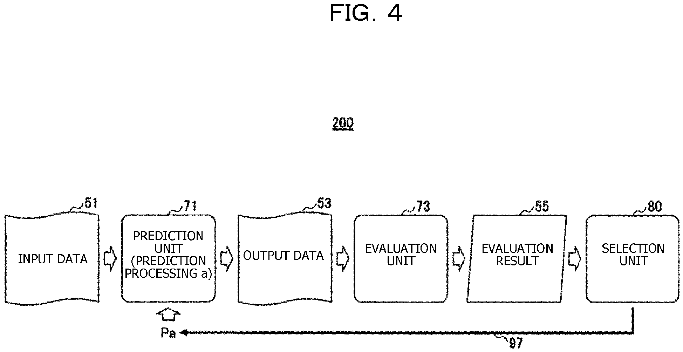

An exemplary functional configuration of a machine learning unit to which the present embodiment is applied will be described. FIG. 4 is a diagram illustrating an exemplary functional configuration of the machine learning unit.

Referring to FIG. 4, the machine learning unit 200 of the present embodiment includes a prediction unit 71, an evaluation unit 73, and a selection unit 80. The prediction unit 71, the evaluation unit 73, and the selection unit 80 are implemented by the processing performed by the CPU 11 executing relevant programs. The storage unit 130 stores input data 51, output data 53, an evaluation result 55, a best parameter value 97, and the like.

The prediction unit 71 receives an input of the input data 51, and executes prediction processing a to predict a target event. A parameter Pa is set in the prediction processing a. The input data 51 corresponds to training data (also referred to as training data). The parameter Pa indicates the parameter value for the prediction processing a. The output data 53 is output to the storage unit 130 by the prediction processing a, and the output data 53 indicates the prediction result. For simplicity, the prediction unit 71 will be described as performing only the prediction processing a, but may execute two or more types of processing.

The evaluation unit 73 evaluates the accuracy of the output data 53. The evaluation unit 73 accumulates the evaluation result 55 in the storage unit 130. The evaluation result 55 indicates a set of parameter values and an evaluation value. The accuracy of the output data 53 is performed by calculating a prediction error. As an example, a root mean squared error (RMSE) can be used.

[Expression 1]

$$RMSE = \sqrt{\frac{1}{n}\sum_{i=1}^{n}(\text{Measured Value i} - \text{Predicted Value i})^2}$$

The selection unit 80 selects the best parameter value 97 using a table in which the evaluation results 55 are accumulated ("evaluation result accumulation table 57" described later). The selection unit 80 sets the best parameter value 97 as the parameter Pa. The processing performed by the prediction unit 71, the evaluation unit 73, and the selection unit 80 is repeated with the newly set parameter Pa. When the difference between the previous parameter Pa and the current parameter Pa is equal to or less than a predefined determination value for determining whether or not convergence has been obtained, the current parameter Pa is adopted as an optimized Pa when prediction is actually made.

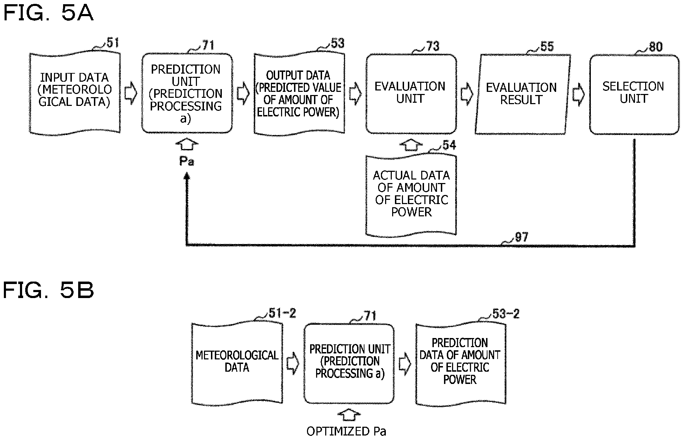

A case where such a machine learning unit 200 of the present embodiment predicts the amount of electric power from meteorological data will be described as an application example. FIGs. 5A ad 5B are a diagram for explaining exemplary machine learning processing according to the present embodiment.

FIG. 5A corresponds to FIG. 4, and exemplifies the process of the machine learning unit 200 when predicting the amount of electric power from the meteorological data. In FIG. 5A, the prediction unit 71 that has set the parameter Pa receives an input of the meteorological data as the input data 51, and predicts the amount of electric power to output the predicted amount of electric power as the output data 53.

The evaluation unit 73 evaluates the accuracy of the output data 53 with reference to actual data 54 of the amount of electric power, and outputs the evaluation result 55. The actual data 54 of the amount of electric power corresponds to teacher data. The selection unit 80 according to the present embodiment obtains the best parameter value 97 using the accumulation table of the evaluation results 55. The best parameter value 97 is set as the parameter Pa of the prediction processing a.

The prediction unit 71 sets the updated parameter Pa in the prediction processing a, and predicts the amount of electric power from the input data 51 of the meteorological data to update the output data 53. The evaluation unit 73 evaluates the accuracy of the output data 53 based on the actual amount of electric power, and outputs the evaluation result 55. The selection unit 80 according to the present embodiment obtains the best parameter value 97 using the accumulation table of the evaluation results 55. The best parameter value 97 is set as the parameter Pa.

Preferably, when the best parameter value 97 currently obtained is substantially the same as the previous best parameter value 97, the current best parameter value 97 is stored in the storage unit 130 as the optimized Pa, and used for actual prediction of the amount of electric power.

FIG. 5B exemplifies the process of predicting the amount of electric power based on meteorological data 51-2 using the optimized Pa. In FIG. 5B, the prediction unit 71 receives an input of the meteorological data 51-2, and executes the prediction processing a in which the optimized Pa is set, to output prediction data 53-2 of the amount of electric power. The prediction data 53-2 of the amount of electric power indicates a predicted value of the amount of electric power hourly for a predetermined period from the present time.

The process illustrated in FIG. 5A and the process illustrated in FIG. 5B are not necessarily performed by the same information processing device 100. The two processes may be performed respectively by separate information processing devices. As an example, a user who will perform the process in FIG. 5B may be provided with the optimized Pa obtained by the process in FIG. 5A according to the present embodiment.

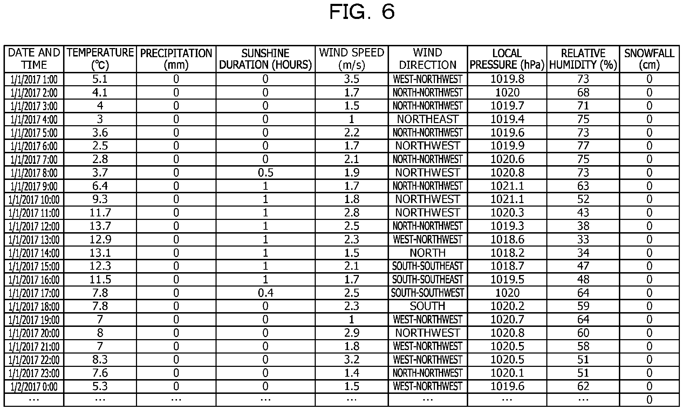

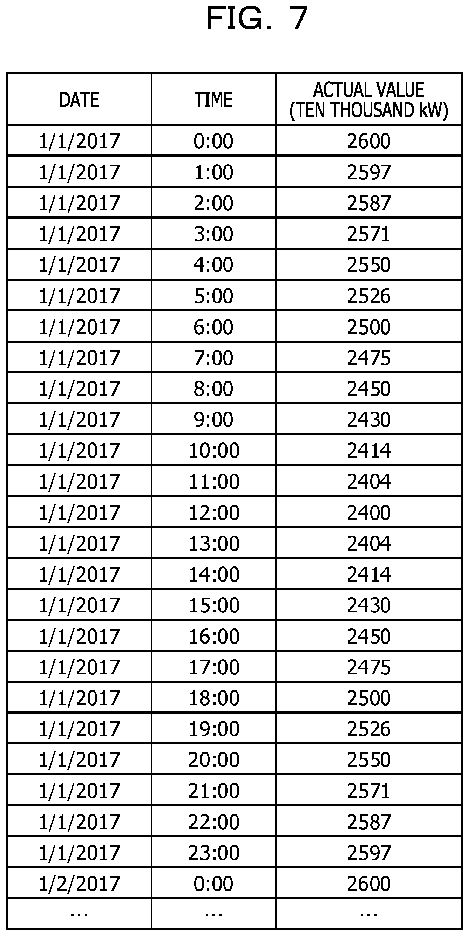

FIGs. 6 and 7 illustrate exemplary data of the input data 51 and the actual data 54 of the amount of electric power to be used in the process in FIG. 5A to which the selection unit 80 according to the present embodiment is applied. FIG. 6 is a diagram illustrating exemplary meteorological data in the process in FIG. 5A (source: Japan Meteorological Agency website, Internet <URL: http://www.jma.go.jp/jma/>").

The meteorological data as the input data 51 exemplified in FIG. 6 has items such as date and time, temperature (°C), precipitation (mm), sunshine duration (hours), wind speed (m/s), wind direction, local pressure (hPa), relative humidity (%), and snowfall (cm).

The date and time indicates the day of the month and year and the time of measurement. In this example, the values of the temperature (°C), precipitation (mm), sunshine duration (hours), wind speed (m/s), wind direction, local pressure (hPa), relative humidity (%), snowfall (cm), and the like measured hourly on January 1, 2017 are recorded.

As an example, in the date and time "2017/1/1 1:00", the temperature (°C) "5.1", the precipitation "0" mm, the sunshine duration "0" hours, the wind speed "3.5" m/s, the wind direction "west-northwest", the local pressure "1019.8" hPa, the relative humidity "73"%, and the snowfall "0" cm are recorded.

With respect to such meteorological data, the predicted value of the amount of electric power for each date and time entry is output from the prediction unit 71 as the output data 53. Then, the accuracy of the output data 53 is evaluated using the actual data 54 of the amount of electric power as illustrated in FIG. 7.

FIG. 7 is a diagram illustrating exemplary data of actual values of the amount of electric power. In FIG. 7, the actual data 54 of the amount of electric power has items such as date, time, and actual value (ten thousand kW). The date indicates the day of the month and year, and the time indicates the time hourly. The actual value (ten thousand kW) indicates the measured value of the amount of electric power on the date and the time. Each item value in FIG. 7 indicates fictitious data created assuming real data.

The evaluation unit 73 evaluates the accuracy of the output data 53 based on the predicted value of the amount of electric power for each date and time entry indicated by the output data 53, and the actual value of the actual data 54 of the amount of electric power, and outputs the evaluation result 55. The evaluation result 55 is accumulated in the storage unit 130 every time the evaluation unit 73 runs, and is used by the selection unit 80 as the evaluation result accumulation table 57.

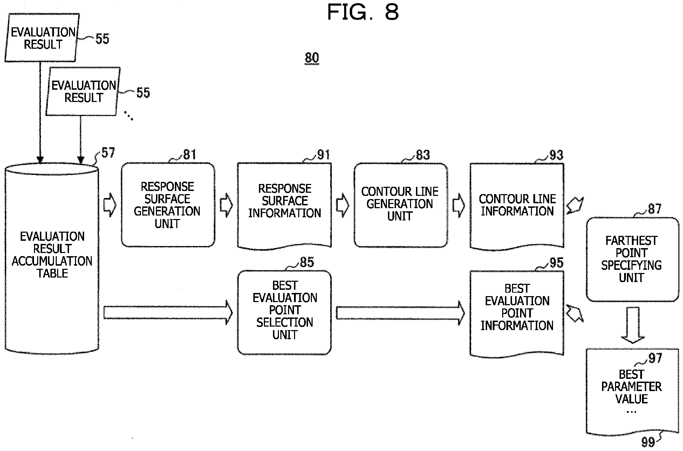

FIG. 8 is a diagram illustrating an exemplary configuration in selection processing. In FIG. 8, the selection unit 80 includes a response surface generation unit 81, a contour line generation unit 83, a best evaluation point selection unit 85, and a farthest point specifying unit 87. The response surface generation unit 81, the contour line generation unit 83, the best evaluation point selection unit 85, and the farthest point specifying unit 87 are implemented by the processing performed by the CPU 11 executing relevant programs. Furthermore, the storage unit 130 stores the evaluation result accumulation table 57, response surface information 91, contour line information 93, best evaluation point information 95, selection information 99 including the best parameter value 97, and the like.

The response surface generation unit 81 performs response surface generation processing of generating a response surface using the evaluation result accumulation table 57. The response surface information 91 is output to the storage unit 130 by the response surface generation unit 81. The contour line generation unit 83 performs contour line generation processing of generating a contour line for the generated response surface. The contour line information 93 is output to the storage unit 130 by the contour line generation unit 83.

The best evaluation point selection unit 85 performs best evaluation point selection processing of selecting the best evaluation point from among all the evaluation points. In the present embodiment, a plurality of best evaluation points having the same evaluation value may be selected. The best evaluation point information 95 is output to the storage unit 130 by the best evaluation point selection unit 85.

The farthest point specifying unit 87 performs farthest point specifying processing of referring to the contour line information 93 and the best evaluation point information 95 to specify a contour line of the best parameter space 4sp that includes a plurality of best evaluation points, and specifying a farthest best evaluation point in distance to the specified contour line, from among the plurality of best evaluation points. The farthest point specifying unit 87 computes the distance to the contour line for each of the plurality of best evaluation points, and specifies the best parameter value 97 having the longest distance. The best parameter value 97 is stored in the storage unit 130 as the parameter Pa.

The evaluation result accumulation table 57 is a data table in which the already obtained evaluation results 55 are accumulated, where the evaluation point and the used parameters Pa (a set of parameters $P_1$, $P_2$, $P_3$, ... , and $P_n$) are treated as one record, and has the number of records equal to the number of evaluations.

The response surface information 91 indicates a response surface function that has been obtained, the parameter value of the surface function, and the like. The contour line information 93 indicates the height of the contour line to be worked out, and the response surface information. The height of the contour line to be worked out is designated by a value obtained by multiplying the highest value in evaluation by a defined ratio. As an example, a value obtained by multiplying the highest value by 0.9 is indicated.

The best evaluation point information 95 corresponds to a table that indicates a set of parameter values that has obtained the highest value among the evaluation points, and the obtained highest value. The selection information 99 is information that indicates at least the best parameter value 97. The selection information 99 may further indicate the highest value in evaluation.

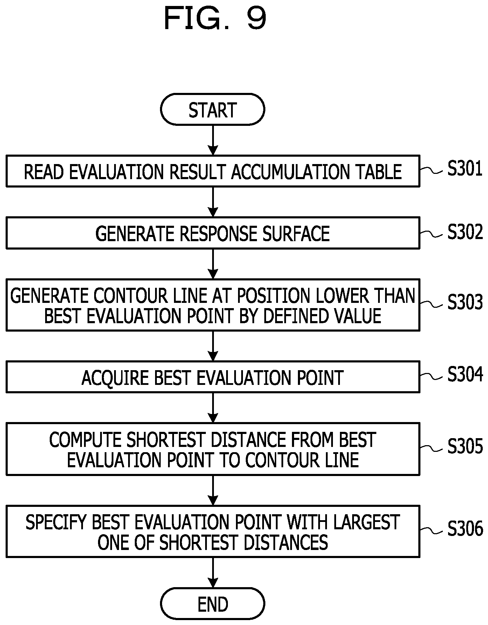

FIG. 9 is a flowchart diagram for explaining the selection processing. In FIG. 9, in the selection processing by the selection unit 80, the evaluation result accumulation table 57 is read in response to the output of the evaluation result 55 from the evaluation unit 73 (step S301).

The response surface generation unit 81 generates a response surface in an n-dimensional space defined by the evaluation values and the parameter values indicated in the evaluation result accumulation table 57 (step S302). In generating the response surface, the shape of the solution can be expressed in n dimensions by using a response surface method or the like that works out an approximate function that passes near a known point, and predicts the shape of the solution to obtain an optimum solution. The response surface information 91 is output to the storage unit 130. Then, a contour line is created for the response surface that represents the obtained shape of the solution.

The contour line generation unit 83 generates a contour line at a position lower than the best evaluation point by a defined value (step S303). The contour line generation unit 83 works out the height of the contour line on the response surface represented by the response surface information 91 using a preset value (for example, 0.9), and generates the contour line at the worked-out height.

Meanwhile, the best evaluation point selection unit 85 acquires, from among the evaluation values in the evaluation result accumulation table 57, the highest value and a set of parameter values that has obtained the highest value, as the best evaluation point (step S304). A plurality of best evaluation points may be acquired. The best evaluation point information 95 is stored in the storage unit 130.

Then, the farthest point specifying unit 87 computes the shortest distance to the contour line for each of the best evaluation points indicated by the best evaluation point information 95 (step S305). Next, the farthest point specifying unit 87 specifies the best evaluation point with the largest obtained shortest distance, and acquires a parameter value from the specified best evaluation point to set the acquired parameter value as the best parameter value 97 (step S306). The selection information 99 that indicates the best parameter value 97 is output to the storage unit 130. The best evaluation point that indicates the best parameter value 97 and the highest value may be set in the selection information 99. Then, the selection processing by the selection unit 80 ends.

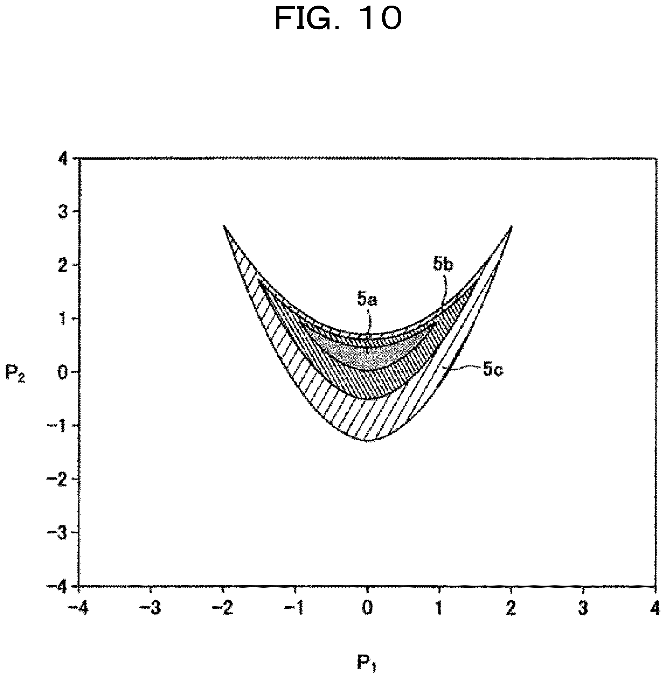

Next, exemplary selection processing will be described with reference to FIGs. 10 to 13. In the following example, the evaluation value is supposed to indicate any one integer value among 0, 1, 2, and 3. Furthermore, in order to simplify the explanation, it is supposed that there are two parameters $P_1$ and $P_2$, and each of the evaluation values of the two parameters are shown in a crescent moon shape in a two-dimensional parameter space.

FIG. 10 is a diagram illustrating exemplary appearance of evaluation values in a parameter space. In FIG. 10, on the two-dimensional space of the parameters $P_1$ and $P_2$, regions 5c, 5b, and 5a that take the values "1", "2", and "3", respectively, as the evaluation values are illustrated with darker shading in this order. The region 5a that takes the evaluation value of "3" is represented by the darkest shading.

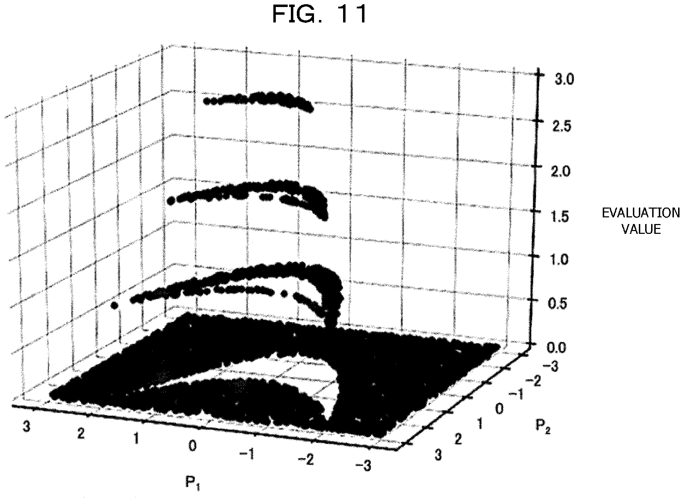

FIG. 11 illustrates an exemplary display of a three-dimensional graph in which, in the range of values "-3" to "3" that the parameter $P_1$ can take and the range of values "-3" to "3" that the parameter $P_2$ can take, 5000 sets of parameter values are sampled, and the evaluation values obtained by the sets of parameter values are indicated on the z-axis.

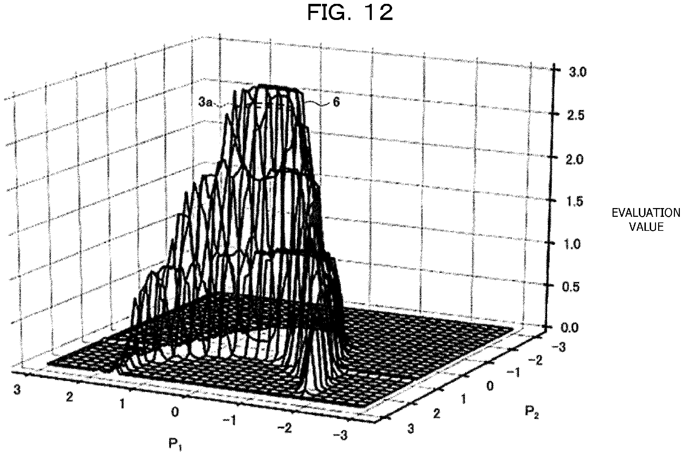

FIG. 11 is a diagram illustrating an exemplary display of a three-dimensional graph in which the evaluation values are added to the exemplary appearance in FIG. 10. In FIG. 11, the negative values of the parameter $P_2$ are indicated on the farther side for easy viewing. A response surface 6 (FIG. 12) is generated by giving the 5000 sampled sets of parameter values and the evaluation values, and generating and synthesizing an approximate surface by RandomForest.

In the response surface processing by the response surface generation unit 81, when the number of records in the evaluation result accumulation table 57 does not reach a predefined number of samples, the response surface 6 can be generated using all the records. When the evaluation result accumulation table 57 contains the number of records equal to or greater than the predefined number of samples, a number of records equal to the number of samples can be extracted in descending order of evaluation value. Then, the contour line generation processing by the contour line generation unit 83 defines the contour line 3a on the generated response surface 6.

FIG. 12 is a diagram illustrating an example of generating a contour line. In FIG. 12, the contour line 3a is generated for the generated response surface 6. As an example, the contour line 3a is generated at the position of "2.7" obtained by multiplying the highest value "3" in evaluation by 0.9. By generating the contour line 3a at a position slightly lower than the highest value "3", it is possible to more clearly indicate the difference in the distance to the contour line 3a between the plurality of best evaluation points. Therefore, the accuracy of selecting the best evaluation point can be enhanced.

Once the best evaluation point with the highest value "3" in evaluation is obtained by the best evaluation point selection unit 85, the farthest point specifying processing by the farthest point specifying unit 87 is performed. At the best evaluation point in this example, the values of the parameters $P_1$ and $P_2$ that have obtained the highest value "3" in evaluation are also indicated.

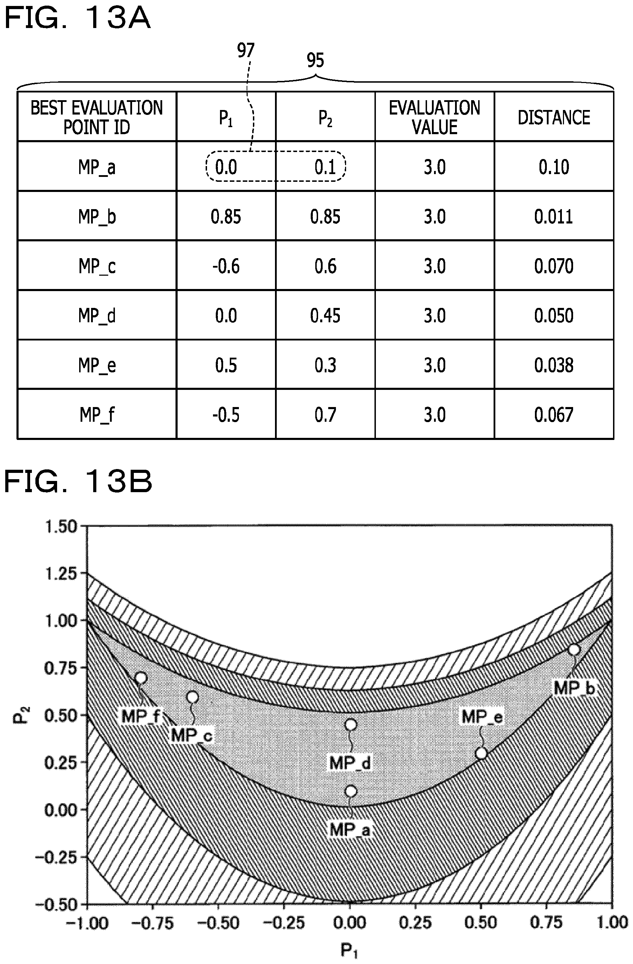

FIGs. 13A and 13B are a diagram for explaining a method of specifying the best parameter value. In FIGs. 13A and 13B, a case where six best evaluation points MP_a, MP_b, MP_c, MP_d, MP_e, and MP_f are specified by the best evaluation point selection unit 85 will be described as an example.

FIGs. 13A and 13B illustrate an exemplary table in which the best evaluation point information 95 is associated with the obtained distance to the contour line 3a. The table in FIG. 13A has items such as best evaluation point ID, $P_1$ and $P_2$, evaluation value, and distance. The best evaluation point ID indicates an identifier that specifies the best evaluation point. $P_1$ indicates the value of the parameter $P_1$. $P_2$ indicates the value of the parameter $P_2$. The evaluation value indicates an evaluation value for the set of $(P_1, P_2)$. In this example, the highest value "3" is indicated. The distance indicates a distance to the contour line 3a indicated in FIG. 12, which has been computed by the farthest point specifying unit 87.

In this example, it is indicated for the best evaluation point MP_a that the value of the parameter $P_1$ is "0.0", the value of the parameter $P_2$ is "0.1", the evaluation value is "3.0", and the distance is "0.10". It is indicated for the best evaluation point MP_b that the value of the parameter $P_1$ is "0.85", the value of the parameter $P_2$ is "0.85", the evaluation value is "3.0", and the distance is "0.011".

Only the values of the distance will be indicated below. The distance of the best evaluation point MP_c is "0.070", the distance of the best evaluation point MP_d is "0.050", the distance of the best evaluation point MP_e is "0.038", and the distance of the best evaluation point MP_f is "0.067".

FIG. 13B is an enlarged view in which the evaluation points are plotted in the parameter space of $P_1$ and $P_2$. In this example, only the best evaluation points MP_a to MP_f with the evaluation value "3.0" are illustrated. Among the plotted best evaluation points MP_a to MP_f, the farthest best evaluation point MP_a in distance is specified from the table in FIG. 13A, and the values (0.0, 0.1) of the parameters $P_1$ and $P_2$ of the best evaluation point MP_a are assigned as the best parameter value 97.

In this manner, the shortest distance to the boundary of the defined contour line 3a is worked out for each of the best evaluation points, and a best evaluation point that is farthest from the boundary is selected from among the worked-out shortest distances; consequently, a set of parameter values that more stably finds a good evaluation value can be selected. The determination accuracy when one best evaluation point is selected from among a plurality of best evaluation points can be improved.

In the above description, the response surface generation unit 81 corresponds to an example of a response surface calculation unit, and the farthest point specifying unit 87 corresponds to an example of a specifying unit.

The present invention is not limited to the embodiments specifically disclosed above, and primary modifications and changes can be made without departing from the scope of the claims.

**EP 3 798 935 A1**

REFERENCE SIGNS LIST

| 11 | CPU |
|----|-----|
| 12 | Main storage device |
| 13 | Auxiliary storage device |
| 14 | Input device |
| 15 | Display device |
| 17 | Communication I/F |
| 18 | Drive device |
| 19 | Storage medium |
| 51 | Input data |
| 53 | Output data |
| 55 | Evaluation result |
| 71 | Prediction unit |
| 73 | Evaluation unit |
| 80 | Selection unit |
| 81 | Response surface generation unit |
| 83 | Contour line generation unit |
| 85 | Best evaluation point selection unit |
| 91 | Response surface information |
| 93 | Contour line information |
| 95 | Best evaluation point information |
| 97 | Best parameter value |
| 100 | Information processing device |
| 130 | Storage unit |

**Claims**

1. A parameter selection method comprising processing, performed by a computer, comprising:

   calculating a response surface that predicts an evaluation value, from evaluation values obtained from training data and sets of parameter values, which are stored in a storage unit;
   working out, from each of maximum evaluation values among the obtained evaluation values, shortest distances to a contour line defined at a position equal to or smaller than the maximum evaluation values on the calculated response surface; and
   specifying a set of parameter values farthest from the contour line, from among the shortest distances worked out for each of the maximum evaluation values.

2. The parameter selection method according to claim 1, wherein the computer performs processing of:

   acquiring a position lower than the maximum evaluation values by a particular height, based on a ratio to the maximum evaluation values; and
   defining the contour line for which the shortest distances are computed, for the response surface at the acquired position lower by the particular height.

3. The parameter selection method according to claim 1 or 2, wherein the computer:

   calculates lengths of a plurality of perpendicular lines from each of the maximum evaluation values to the contour line;
   specifies a shortest length from among the lengths of the plurality of perpendicular lines for each of the maximum evaluation values, to work out the shortest distances of the maximum evaluation values; and
   acquires a set of parameter values of a maximum evaluation value that has longest one of the shortest distances, among the maximum evaluation values.

4. The parameter selection method according to any one of claims 1 to 3, wherein
   the computer performs processing of:

   predicting a target state defined from the training data, using the set of parameter values farthest from the contour line, and outputting a predicted value that indicates the target state; and
   evaluating the predicted value using a measured value of the target state, and outputting, to the storage unit, an evaluation value that has been obtained and the set of parameter values farthest from the contour line, the set of parameter values having been used for the predicting, to accumulate the output evaluation value and set of parameter values.

5. The parameter selection method according to claim 4, wherein
   every time the evaluation value and the set of parameter values farthest from the contour line, the set of parameter values having been used for the predicting, are output to the storage unit, the set of parameter values farthest from the contour line is updated.

6. A parameter selection program that causes a computer to perform processing comprising:

   calculating a response surface that predicts an evaluation value, from evaluation values obtained from training data and sets of parameter values, which are stored in a storage unit;
   working out, from each of maximum evaluation values among the obtained evaluation values, shortest distances to a contour line defined at a position equal to or smaller than the maximum evaluation values on the calculated response surface; and
   specifying a set of parameter values farthest from the contour line, from among the shortest distances worked out for each of the maximum evaluation values.

7. An information processing device comprising:

   a response surface calculation unit that calculates a response surface that predicts an evaluation value, from evaluation values obtained from training data and sets of parameter values, which are stored in a storage unit; and
   a specifying unit that works out, from each of maximum evaluation values among the obtained evaluation values, shortest distances to a contour line defined at a position equal to or smaller than the maximum evaluation values on the calculated response surface, and specifies a set of parameter values farthest from the contour line, from among the shortest distances worked out for each of the maximum evaluation values, from among the worked-out shortest distances.

FIG. 1

# FIG. 2

# FIG. 3

INFORMATION PROCESSING DEVICE — 100

130

| CPU 11 | MAIN STORAGE DEVICE 12 | AUXILIARY STORAGE DEVICE 13 | INPUT DEVICE 14 |

B

BUS

| DISPLAY DEVICE 15 | COMMUNICATION I/F 17 | DRIVE DEVICE 18 |

STORAGE MEDIUM — 19

FIG. 4

200

INPUT DATA _51 ⇨ PREDICTION UNIT (PREDICTION PROCESSING a) _71 ⇨ OUTPUT DATA _53 ⇨ EVALUATION UNIT _73 ⇨ EVALUATION RESULT _55 ⇨ SELECTION UNIT _80

Pa ← ⟋97

## FIG. 5A

INPUT DATA (METEOROLOGICAL DATA) 51 → PREDICTION UNIT (PREDICTION PROCESSING a) 71 ↑ Pa → OUTPUT DATA (PREDICTED VALUE OF AMOUNT OF ELECTRIC POWER) 53 → EVALUATION UNIT 73 ↑ ACTUAL DATA OF AMOUNT OF ELECTRIC POWER 54 → EVALUATION RESULT 55 → SELECTION UNIT 80

97

## FIG. 5B

METEOROLOGICAL DATA 51-2 → PREDICTION UNIT (PREDICTION PROCESSING a) 71 ↑ OPTIMIZED Pa → PREDICTION DATA OF AMOUNT OF ELECTRIC POWER 53-2

# FIG. 6

| DATE AND TIME | TEMPERATURE (℃) | PRECIPITATION (mm) | SUNSHINE DURATION (HOURS) | WIND SPEED (m/s) | WIND DIRECTION | LOCAL PRESSURE (hPa) | RELATIVE HUMIDITY (%) | SNOWFALL (cm) |
|---|---|---|---|---|---|---|---|---|
| 1/1/2017 1:00 | 5.1 | 0 | 0 | 3.5 | WEST-NORTHWEST | 1019.8 | 73 | 0 |
| 1/1/2017 2:00 | 4.1 | 0 | 0 | 1.7 | NORTH-NORTHWEST | 1020 | 68 | 0 |
| 1/1/2017 3:00 | 4 | 0 | 0 | 1.5 | NORTH-NORTHWEST | 1019.7 | 71 | 0 |
| 1/1/2017 4:00 | 3 | 0 | 0 | 1 | NORTHEAST | 1019.4 | 75 | 0 |
| 1/1/2017 5:00 | 3.6 | 0 | 0 | 2.2 | NORTH-NORTHWEST | 1019.6 | 73 | 0 |
| 1/1/2017 6:00 | 2.5 | 0 | 0 | 1.7 | NORTHWEST | 1019.9 | 77 | 0 |
| 1/1/2017 7:00 | 2.8 | 0 | 0 | 2.1 | NORTH-NORTHWEST | 1020.6 | 75 | 0 |
| 1/1/2017 8:00 | 3.7 | 0 | 0.5 | 1.9 | NORTHWEST | 1020.8 | 73 | 0 |
| 1/1/2017 9:00 | 6.4 | 0 | 1 | 1.7 | NORTH-NORTHWEST | 1021.1 | 63 | 0 |
| 1/1/2017 10:00 | 9.3 | 0 | 1 | 1.8 | NORTHWEST | 1021.1 | 52 | 0 |
| 1/1/2017 11:00 | 11.7 | 0 | 1 | 2.8 | NORTHWEST | 1020.3 | 43 | 0 |
| 1/1/2017 12:00 | 13.7 | 0 | 1 | 2.5 | NORTH-NORTHWEST | 1019.3 | 38 | 0 |
| 1/1/2017 13:00 | 12.9 | 0 | 1 | 2.3 | WEST-NORTHWEST | 1018.6 | 33 | 0 |
| 1/1/2017 14:00 | 13.1 | 0 | 1 | 1.5 | NORTH | 1018.2 | 34 | 0 |
| 1/1/2017 15:00 | 12.3 | 0 | 1 | 2.1 | SOUTH-SOUTHEAST | 1018.7 | 47 | 0 |
| 1/1/2017 16:00 | 11.5 | 0 | 1 | 1.7 | SOUTH-SOUTHEAST | 1019.5 | 48 | 0 |
| 1/1/2017 17:00 | 7.8 | 0 | 0.4 | 2.5 | SOUTH-SOUTHWEST | 1020 | 64 | 0 |
| 1/1/2017 18:00 | 7.8 | 0 | 0 | 2.3 | SOUTH | 1020.2 | 59 | 0 |
| 1/1/2017 19:00 | 7 | 0 | 0 | 1 | WEST-NORTHWEST | 1020.7 | 64 | 0 |
| 1/1/2017 20:00 | 8 | 0 | 0 | 2.9 | NORTHWEST | 1020.8 | 60 | 0 |
| 1/1/2017 21:00 | 7 | 0 | 0 | 1.8 | WEST-NORTHWEST | 1020.5 | 58 | 0 |
| 1/1/2017 22:00 | 8.3 | 0 | 0 | 3.2 | WEST-NORTHWEST | 1020.5 | 51 | 0 |
| 1/1/2017 23:00 | 7.6 | 0 | 0 | 1.4 | NORTH-NORTHWEST | 1020.1 | 51 | 0 |
| 1/2/2017 0:00 | 5.3 | 0 | 0 | 1.5 | WEST-NORTHWEST | 1019.6 | 62 | 0 |
| … | … | … | … | … | … | … | … | 0 |

# FIG. 7

| DATE | TIME | ACTUAL VALUE (TEN THOUSAND kW) |
|---|---|---|
| 1/1/2017 | 0:00 | 2600 |
| 1/1/2017 | 1:00 | 2597 |
| 1/1/2017 | 2:00 | 2587 |
| 1/1/2017 | 3:00 | 2571 |
| 1/1/2017 | 4:00 | 2550 |
| 1/1/2017 | 5:00 | 2526 |
| 1/1/2017 | 6:00 | 2500 |
| 1/1/2017 | 7:00 | 2475 |
| 1/1/2017 | 8:00 | 2450 |
| 1/1/2017 | 9:00 | 2430 |
| 1/1/2017 | 10:00 | 2414 |
| 1/1/2017 | 11:00 | 2404 |
| 1/1/2017 | 12:00 | 2400 |
| 1/1/2017 | 13:00 | 2404 |
| 1/1/2017 | 14:00 | 2414 |
| 1/1/2017 | 15:00 | 2430 |
| 1/1/2017 | 16:00 | 2450 |
| 1/1/2017 | 17:00 | 2475 |
| 1/1/2017 | 18:00 | 2500 |
| 1/1/2017 | 19:00 | 2526 |
| 1/1/2017 | 20:00 | 2550 |
| 1/1/2017 | 21:00 | 2571 |
| 1/1/2017 | 22:00 | 2587 |
| 1/1/2017 | 23:00 | 2597 |
| 1/2/2017 | 0:00 | 2600 |
| … | … | … |

FIG. 8

80

EVALUATION RESULT 55

EVALUATION RESULT 55

57 EVALUATION RESULT ACCUMULATION TABLE

81 RESPONSE SURFACE GENERATION UNIT

91 RESPONSE SURFACE INFORMATION

83 CONTOUR LINE GENERATION UNIT

93 CONTOUR LINE INFORMATION

87 FARTHEST POINT SPECIFYING UNIT

85 BEST EVALUATION POINT SELECTION UNIT

95 BEST EVALUATION POINT INFORMATION

97 BEST PARAMETER VALUE ...

99

# FIG. 9

START

READ EVALUATION RESULT ACCUMULATION TABLE ∼ S301

GENERATE RESPONSE SURFACE ∼ S302

GENERATE CONTOUR LINE AT POSITION LOWER THAN BEST EVALUATION POINT BY DEFINED VALUE ∼ S303

ACQUIRE BEST EVALUATION POINT ∼ S304

COMPUTE SHORTEST DISTANCE FROM BEST EVALUATION POINT TO CONTOUR LINE ∼ S305

SPECIFY BEST EVALUATION POINT WITH LARGEST ONE OF SHORTEST DISTANCES ∼ S306

END

# FIG. 10

FIG. 11

EVALUATION
VALUE

FIG. 12

EVALUATION
VALUE

## FIG. 13A

| BEST EVALUATION POINT ID | $P_1$ | $P_2$ | EVALUATION VALUE | DISTANCE |
|---|---|---|---|---|
| MP_a | 0.0 | 0.1 | 3.0 | 0.10 |
| MP_b | 0.85 | 0.85 | 3.0 | 0.011 |
| MP_c | -0.6 | 0.6 | 3.0 | 0.070 |
| MP_d | 0.0 | 0.45 | 3.0 | 0.050 |
| MP_e | 0.5 | 0.3 | 3.0 | 0.038 |
| MP_f | -0.5 | 0.7 | 3.0 | 0.067 |

## FIG. 13B

## INTERNATIONAL SEARCH REPORT

| International application No. |
|---|
| PCT/JP2018/019661 |

**A. CLASSIFICATION OF SUBJECT MATTER**
Int.Cl. G06N99/00(2010.01)i

According to International Patent Classification (IPC) or to both national classification and IPC

**B. FIELDS SEARCHED**

Minimum documentation searched (classification system followed by classification symbols)
Int.Cl. G06N99/00

Documentation searched other than minimum documentation to the extent that such documents are included in the fields searched
| Published examined utility model applications of Japan | 1922-1996 |
| Published unexamined utility model applications of Japan | 1971-2018 |
| Registered utility model specifications of Japan | 1996-2018 |
| Published registered utility model applications of Japan | 1994-2018 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2008-299413 A (MITSUBISHI ELECTRIC CORPORATION) 11 December 2008, paragraphs [0001], [0014]-[0038], [0046], [0047], [0051], fig. 6-8 (Family: none) | 1-7 |
| A | 貝原俊也，藤井信忠，野中朋美，伴井悠馬，応答曲面法による解空間の構造推定機能を有するPSOの提案，電気学会論文誌C，01 September 2014, vol. 134, no. 9, pp. 1293-1298, ISSN 0385-4221, (KAIHARA, Toshiya, FUJII, Nobutada, NONAKA, Tomomi, TOMOI, Yuma, A proposal of PSO with presumption function of the solution landscape by response surface method, IEEJ Transactions on Electronics, Information and Systems) | 1-7 |

☐ Further documents are listed in the continuation of Box C. ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 10.08.2018 | 21.08.2018 |

| Name and mailing address of the ISA/ | Authorized officer |
|---|---|
| Japan Patent Office 3-4-3, Kasumigaseki, Chiyoda-ku, Tokyo 100-8915, Japan | Telephone No. |

Form PCT/ISA/210 (second sheet) (January 2015)

**EP 3 798 935 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 8272761 A
- JP 5265512 A
- JP 10301975 A